# EUROPEAN PATENT APPLICATION

(11) **EP 3 109 816 A1**
(43) Date of publication of application: **28.12.2016**
(21) Application number: 15173820.0
(22) Date of filing: 25.06.2015
(51) Int. Cl.: G06Q 20/08, G06Q 20/22

(54) **DISTRIBUTED PAYMENT SYSTEM**

(71) Applicant: Magicview Connected Products B.V., 5571 NA Bergeijk (NL)
(72) Inventor: Daems, Frank Casimir Helene, 3220 Holsbeek (BE); Vanhoutte, Philippe Emmanuel Johannes, 5571 NA Bergeijk (NL)
(74) Representative: Philippaerts, Yannick

(57) **Abstract**

A payment system comprising a payment device and a transaction terminal adapted to communicate with a payment service platform to trigger a payment from a payer to a receiver account, wherein the transaction terminal is distributed in an environment having at least one terminal tag provided to communicate with a terminal backend system, and wherein the payment device is formed as a payment tag adapted to communicate with the terminal tag to identify the payment tag to the terminal tag and to measure a distance between payment and terminal tag, wherein the backend system is adapted to collect data from the terminal tags, the data comprising said identity and distance, and wherein the terminal backend system comprises a payment message generator, wherein the terminal backend system is operationally connected to said payment service platform for triggering said payment based on said payment message.

## Description

The present invention relates to a transaction and payment system with a payment device and a transaction terminal that is adapted to communicate with a payment service platform in order to trigger a payment from an account relating to the payment device to an account relating to the transaction terminal.

Payment devices are widely used, for example in stores, and are used to trigger a payment from the payer to the receiver. Thereby, the payer carries a payment device, for example a bank card, wherein identification and authentication information is stored relating to the payer and to which an account is related. The receiver has a payment terminal that is able on the one hand to communicate with the payment device of the payer and on the other hand to communicate with a payment service platform, typically formed at a remote server, and to which an account is related. Such payment system relies on multiple requirements that must all be fulfilled for the payment system to be safe and secure for use. A first requirement is that the transaction terminal is authorized to receive payments. A second requirement is that the payment device is authorized to make payments. A third requirement is that the amount to be paid is correctly established and a fourth requirement is that the payment is confirmed in one way or another by both the payer and the receiver. Each of these four requirements is implemented having a level of security, wherein the level security for each item can be made dependent on the context wherein the payment system is implemented.

An example of such payment system is a smartphone software application wherein a user can register as payer and/or receiver, and wherein a transaction can be set up by generating at the receiver smartphone a 2D-barcode comprising an amount and the receiver identification information, and scanning this barcode with the smartphone of the payer to confirm the payment. Comparing such payment system with a conventional and broadly known payment system which is typically used in stores, having a physical transaction terminal and a bankcard as payment device, it will be evident that the levels of security for the smartphone implemented payment system are lower for all of the multiple requirements. However, the maximum amount that can be paid is also lower using a smartphone implemented payment system.

Service related payment systems have been designed taking into accounts the above mentioned payment system requirements. For example, parking payment via SMS, web based or software application based purchase of access tickets such as bus tickets, train tickets, airplane tickets or concert tickets. A drawback of these payment systems is that they require specific user interactions, which interactions are different for different payment systems so that it might become unclear for the payer how the payment can be triggered at the moment of consumption of the service. Therefore, users will generally tend to conduct the payments minutes, hours or even days before consumption of the service. For example, a train user will buy a train ticket typically an hour before getting on the train. This behavior limits the freedom of the user in his service consumption.

It is an object of the present invention to propose a payment system allowing more intuitive and spontaneous use of services.

To this end, the present invention proposes a payment system with a payment device and a transaction terminal that is adapted to communicate with a payment service platform in order to trigger a payment from an account relating to the payment device to an account relating to the transaction terminal, wherein the transaction terminal is distributed in an environment having at least one terminal tag provided to communicate with a terminal backend system, and wherein the payment device is formed as a payment tag adapted to communicate with at least one terminal tag to identify the payment tag to the terminal tag and to measure a distance between the payment tag and the terminal tag, wherein the terminal backend system is adapted to collect data from the at least one terminal tag, the data at least comprising the payment tag identity and said distance, wherein the terminal backend system comprises a payment message generator for generating the payment message based on a predetermined set of rules, wherein the terminal backend system is operationally connected to the payment service platform for triggering the payment based on the payment message.

The payment system of the invention is distributed in the environment. Terminal tags are provided in the environment, which terminal tags communicate with the terminal backend system. A payment tag can freely move in the environment, and is able to communicate with the terminal tags. Due to the ability of payment tags to identify to the terminal tags, and the ability to measure a distance between payment tag and terminal tag, payments can be triggered based on time and location information. This is in contrast with all existing payment systems, where payment is conducted based on manual input and/or configuration by at least one of the payer and the receiver. The payment message triggering the payment is generated based on a set of rules allowing the above mentioned payment systems requirements to be met. These rules can define the amounts to be paid and can set requirements relating to the location and duration of the payment tag relative to the terminal tags. Furthermore, this set of rules allows the payer to register the payment tag for predetermined services, and allows service providers to define services and related amounts. In this manner, the security of the payment system can be guaranteed while the user can consume services in an intuitive and user friendly manner. For example, if a car is provided with a payment tag and a parking spot is provided with a terminal tag, detection of the payment tag relating to the car in a predefined proximity of the terminal tag relating to the parking spot for at least some time, for example 10 minutes can trigger, based on the set of rules, a payment from the car owner's or car user's account to the parking owner's account. This is only one example, and further examples will be described hereunder. Such payment system allows the user to make last minute decisions on whether to consume the service, and on the duration of consumption. Thereby correct payment is triggered based on a set of rules, based on identification information and based on location information. This allows the user to pay for a service while or directly after consumption of the service, which is significantly more intuitive and user-friendly than manually inputting payment service details for payment, which at its turn allows more spontaneous use of services.

Preferably the at least one terminal tags are placed in groups of at least three terminal tags having a predetermined relative position in such a manner that when distances are measured between payment tag and the at least three terminal tags, a position of the payment tag in the environment can be determined via triangular calculation. When the terminal tags are placed in groups of at least three tags, wherein the three tags preferably form a triangle, distance measurement between a payment tag and the three terminal tags allows to determine an exact position of the payment tags relative to the environment wherein the three terminal tags are situated. This allows a more specific determination of the location of the payment tag which specific determination of location enhances the security of the payment system. Furthermore, it increases the possibilities for the service providers. For example, when a transportation vehicle such as a bus or a train is provided with a group of at least three terminal tags, not only it can be determined whether a payment tag is on the transportation vehicle, but also the specific location of the payment tag in the transportation vehicle can be determined. This allows a service provider to define multiple zones in the environment relating to different services. In the example of the transportation vehicle, a first class zone and a second class zone can for example be defined.

Preferably the predetermined set of rules define a zone in the environment relating to the transaction terminal, a corresponding time period and corresponding amount, and wherein the payment message generator is adapted to generate a payment message, when the payment device resides in the zone for at least the corresponding time period, the payment message comprising the corresponding amount, payment device identity and information relating to the transaction terminal. The transaction terminal is distributed in the environment. Thereby, the transaction terminal equipment comprises the terminal tags and comprises the terminal backend system. This allows the terminal to be defined as a zone inside the environment. As described above, multiple zones can be defined in the environment. These zones can be owned by different owners, for example in a parking building wherein different parking spots are owned by different owners. Each owner can define a zone in the parking building environment, as described above, to trigger a parking payment. Thereby, multiple zones can be defined by multiple parking owners. This example shows that a single group of terminal tags can be used by multiple service providers, coordinated by the terminal backend system based on the predetermined set of rules, thereby arriving at a payment system wherein the payment terminal which conventionally relates to a single receiver, is distributed in the environment. The transaction tags are able to identify the payment tag, and determine a distance between the payment tag and the transaction tag. This information is collected in the terminal backend system, where, based on the collected data, can be determined over time where a payment tag is located in the environment. This allows to measure the duration of presents of a payment tag in a predetermined zone of the environment. Based on this information and the predetermined set of rules, the payment message generator can generate a payment message to trigger the payment at the payment service platform. The service message comprises at least information relating to the amount, information relating to the payment device identity and information relating to the transaction terminal. As described above, preferably multiple unique transaction terminals are defined in the environment as multiple zones, wherein the multiple transaction terminals can be defined in the predetermined set of rules in relation to corresponding time period and corresponding amounts. This allows the transaction terminals to be completely distributed in the environment, wherein multiple transaction terminals can relate to different services having different corresponding durations and payment amounts. Thereby, preferably the multiple unique transaction terminals are formed in the single environment comprising a single group of at least three terminal tags.

Preferably, at least one of the terminal tags comprises a network communication module to communicate with the terminal backend system. Preferably, the corresponding network communication modules are formed as wired or preferably wireless IP communication modules, and wherein all of the at least one terminal tags are provided to communicate with the terminal backend system via the network communication modules. The terminal tags can be provided to communicate with each other via a first communication technology which is described in more detail hereunder. Therefore, if only one of the terminal tags comprises a communication module that is able to communicate with the terminal backend system, all terminal tags can communicate via this one module with the terminal backend system. Alternatively, all terminal tags can be provided with such module so that all terminal tags can directly communicate with the backend system. A combination of the above mentioned situations, where some terminal tags are provided with and other terminal tags are not provided with the communication module, is also possible. In each case, via the network communication module, all terminal tags are able to directly or indirectly communicate with the terminal backend system. This allows the terminal backend system to collect data from all terminal tags, and to use the data to generate payment messages based on the predetermined set of rules.

Preferably, each terminal tag and each payment tag comprises an IEEE 802.15.4, more preferably an IEEE 802.15.4.a communication module for being adapted to communicate with each other. An IEEE 802.15.4.a communication module is a module complying with the IEEE 802.15.4.a standard, released in August 2007, which specifies low power and wide bandwidth communication. Preferably, the IEEE 802.15.4.a communication module is an Ultra-wideband communication module, which is known to have the ability to measure a distance towards another Ultra-wideband communication module with an accuracy of 10 centimeters. Using this Ultra-wideband technology for determining a position allows to determine the position of a payment tag in the environment with an accuracy of about 10 centimeters. This allows for example to determine the exact seat a person wearing a payment tag is sitting on in a bus or train provided with at least three terminal tags. This accurate positioning significantly improves the security of the payment system.

Preferably, each one of the payment tags and the at least one terminal tag comprise a unique identification certificate. This certificate is preferably stored in a secure memory operationally connected to the tag. Based on these identification certificates, payment tags as well as terminal tags can be authenticated to each other so that the security of the payment system is further improved.

The invention further relates to a method for triggering a payment from an account relating to a payment device to an account relating to a transaction terminal, wherein the method comprises:
- detecting a payment tag in an environment comprising at least one terminal tags;
- communicating between the payment tag and the terminal tag to identify the payment tag to the terminal tag and to measure a distance between the terminal tag and the payment tag;
- collecting data by a terminal backend system from the at least one terminal tag, the data at least comprising payment tag identity and said distance;
- generating a payment message by the terminal backend system based on a predetermined set of rules;
- sending the payment message from the terminal backend system to a payment service platform for triggering the payment.

The method comprises the steps that are conducted when the above described payment system is used. Therefore, the advantages and effects that are described above in relation to the payment system equally apply to the method.

Preferably, the terminal backend system collects data form a group of at least three terminal tags having a predetermined relative position, and is provided to determine a position of the payment tag in the environment via triangular calculation. Further preferably, the communicating further comprises authenticating the payment device to the terminal tag. These steps increase the security level by improving the determination of the location and by improving the determination of the identity of the payment tag.

The invention will now be described in more details with respect to the drawings illustrating some preferred embodiments of the invention. In the drawings:
figure 1 illustrates the functional layers in the payment system according to an embodiment of the invention; and
figure 2 illustrates a practical implementation of the payment system according to an embodiment of the invention.

In the drawings a same reference number has been allocated to a same or analogous element.

The present invention relates to a payment system that is distributed in an environment. Thereby, the payment system is able to measure and quantify behavior of payers or costumers, which are preferably registered to the payment system. Based on this measure and quantified behavior, the payment system of the invention triggers payments from consumer accounts to service provider accounts. Thereby, the invention is particularly optimized for transport related services such as public transportation services and location occupation services. Examples of public transportation services are: bus, train, airplane, taxi, etc. Examples of location occupation services are: parking services where a car occupies a parking spot, concert and cinema services whereby a person occupies a seat, etc. Thereby, the payment system of the invention is adapted to conduct live measurements of the consumer localization and movements in a predetermined environment so that, based on these measurements, the consumed service can be identified. Once the consumed service is identified, a payment that corresponds to the consumed service is triggered.

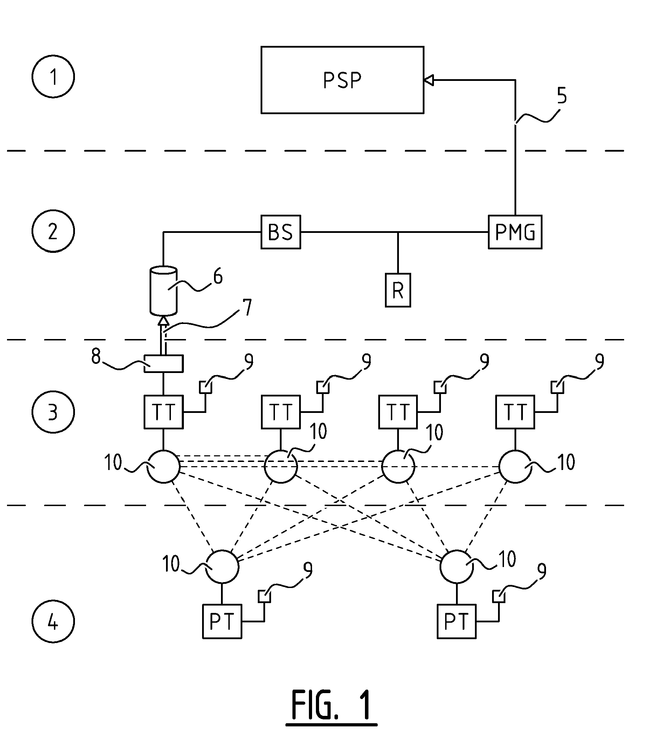

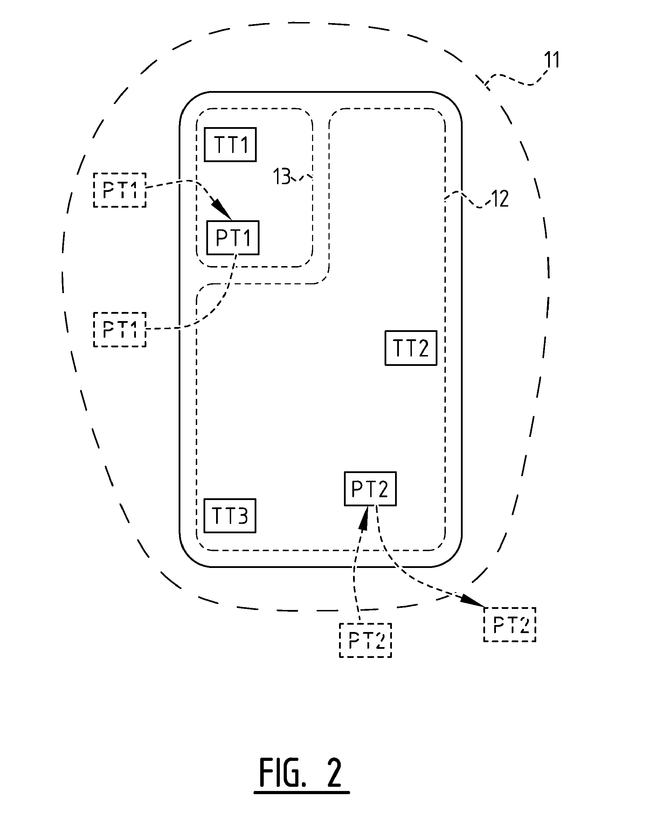

In general, any payment system is designed to build trust to its users. If a certain amount of trust cannot be reached, the payment system will simply not be used by users because of a lack of trust. Multiple requirements influence the level of trust of the payment system. A first requirement relates to the identity of the transaction terminal. In any payment system, the transaction terminal should be identifiable, and the identified transaction terminal should be authorized to receive payments. A second requirement relates to the identity of the payment device. The payment device should also be identifiable, and preferably the credibility of the payment device is confirmed before triggering a payment. A third requirement relates to the amount to be paid. Both the payer and the receiver expect the amount of the payment to be correct. A fourth requirement relates to a direct or indirect confirmation of the payer and/or the receiver that the transaction terminal identity, payment device identity and the amount is correct. Depending on the context wherein the payment system is implemented and the maximum amounts that can be paid with the payment system, each of these four requirements are implemented with minimal security levels to gain enough trust to its users. In the payment system of the present invention, which will be further described hereunder with reference to the figures 1 and 2, many design choices have been made to increase the security levels of the above mentioned requirements, to obtain a payment system that is trustworthy.

Figure 1 illustrates the functional layers in the payment system according to an embodiment of the invention. Thereby, the payment system as shown in figure 1 has four layers. A first layer 1 comprises the payment system platform PSP. A payment system platform PSP is a platform interconnecting multiple financial institutes, and wherein the payment system platform is configured to execute a transfer of an amount from an account relating to the payer having a payment device to an account relating to the receiver having a transaction terminal. Such transfer is executed upon receipt of a payment trigger message.

The payment trigger message is received from a payment message generator PMG, which resides in the second layer 2 of the payment system, and which payment message generator sends payment trigger messages to the payment service platform PSP. This is illustrated in figure 1 with arrow 5. To improve the security, the payment service platform PSP can have mechanisms, for example via account mirroring technics, to check the validity of incoming payment trigger messages. Thereby, the payment service platform PSP can provide a response to the payment message generator PMG upon receipt of a payment trigger message 5, to confirm that the payment trigger message is correctly received and meets predetermined requirements. Such mechanism for example allows to confirm the credibility of the payment device or payer, and/or allows to confirm that the transaction terminal or receiver is registered for receiving payments.

The second layer 2 and the third layer 3 of the payment system of figure 1 are designed to embody the transaction terminals in the payment system. The transaction terminals, related to payment receivers and/or service providers, are distributed in an environment, as will be further explained in relation to figure 2. The second layer 2 of the payment system comprises a terminal backend system BS. The backend system BS is adapted to process data 6 based on a predetermined set of rules R. The data 6 is received from the third layer of the payment system, and comprises payment device identity data, distances between the identified payment devices and multiple terminal tags, based upon which distances a location of the payment device in the environment can be calculated. The data 6 further comprises time related information so that location information and time information can be correlated so that the duration of residence of the payment device in a specific location can be deduced from the data 6. Based on the location information and time information that is collected for a predetermined payment device, services consumed by the payment device can be identified. For example, if a payment device is located for more than five minutes in a location known to be a parking spot, the backend system can conclude that a parking service was consumed by the payment device user. Upon such detection of consumption, a payment trigger message can be generated by the payment message generator PMG, so that the consumed services can be billed.

The backend system BS processes the data 6 based on a predetermined set of rules R. In this predetermined set of rules R, multiple services are defined. Thereby, each service is related to a specific location, defined as a zone in the environment. Furthermore, for each service, time and duration restrains can be provided in the set of rules R. Also, the set of rules R comprises the amounts that relate to the service. Thereby, the amounts can be coupled via a formula or via predetermined ranges to the duration of consumption of the service. The set of rules R further comprises the identity of the service provider so that the receiver of the payment can be identified. In the set of rules, further restrains can be defined to further improve the security level of the payment system. For example, a payer and/or receiver confirmation can be implemented whereby and a payer and/or receiver must for a predetermined service confirm his or her consumption before the payment message generator PMG generates and sends a payment trigger message 5.

The third level 3 of the payment system comprises multiple terminal tags TT. These terminal tags TT are preferably physically distributed in the environment. The terminal tags TT are further preferably placed in groups of at least three terminal tags, wherein the terminal tags are arranged in a triangle in the environment. When a distance is measured between a payment tag PT and three terminal tags TT that are arranged in a triangle, the location of the payment tag PT can be uniquely determined using triangular calculation. Each one of the terminal tags TT comprises preferably an Ultra-wideband communication module 10. The Ultra-wideband technology is defined in the IEEE 802.15.4.a standard, which is incorporated by reference for the purpose of explaining the technical details of the communication module 10. Via this Ultra-wideband communication module 10, the terminal tags TT are able to communicate with the payment tags PT. Furthermore, if necessary, the terminal tags TT can also communicate with each other via the Ultra-wideband communication module 10. In the example of figure 1, only one of the terminal tags TT is provided with a communication module 8 for communicating with the terminal backend system BS. This communication is illustrated with arrow 7. Via this communication module 8, which is preferably a wired or wireless IP communication system or a telephone network system such as 3G or 4G, the data collected by the terminal tags TT can be collected at the second layer 2 of the payment system. In the example of figure 1, where only the transaction tag shown on the left hand side of the figure is provided with such communication module 8, data collected by the other terminal tags TT are sent via the Ultra-wideband communication module 10 towards the terminal tag at the left hand side of the figure, which communicates all data from all terminal tags TT via communication module 8 to the backend system BS. Alternatively, not shown in the figures, all terminal tags are provided with a communication module 8 for communicating with the backend system BS. Via this communication module 8, data collected by the terminal tags can be directly or indirectly sent 7 to the backend system in layer 2 of the payment system, where the data 6 is collected and processed.

The fourth layer 4 in the payment system comprises payment tags PT. Payment tags PT are formed as devices, preferably battery powered, comprising an Ultra-wideband communication module 10. Via these Ultra-wideband communication modules 10, the payment tags PT can communicate with the terminal tags TT that are distributed in the environment. In this manner, when a payment tag PT resides in an environment, the movements of the payment tags can be tracked by the terminal tags. This tracking generates both location and time information, based upon which the backend system BS collecting the data 6 can generate payment trigger messages as is described above. Each payment tag PT is preferably related to a consumer, and is carried along by the consumer so that time and location information of the consumer is measurable via the payment tag. Thereby, a consumer can register a payment tag for certain services, thereby again enhancing the security level for the above mentioned requirements. A payment tag can also relate to an object of the consumer, for example a car, so that services that are related to the object of the consumer can also be detected based on tracking of the object in the environment. The terminal tags TT can be battery powered or can be connected to an external power source.

Preferably, each one of the terminal tags and payment tags are provided with a unique identification certificate. Such identification certificate is preferably stored in a secure memory at the tag. Via the identification certificate, an authentication procedure can be conducted to identify the payment tag PT to the terminal tag TT. This significantly improves the security level and trust of the payment system since the authentication prevents identity theft. Not only does such identification certificate and authentication procedure prevent identity theft of the payment tags, it also prevents transaction terminal fraud since terminal tags also comprise an identification certificate.

The payment trigger message can be generated by creating a session for optimizing privacy of the users of the payment system. Using the session and corresponding session keys, it is possible for the service provider to know what is bought without knowing who bought it. Furthermore, the payment trigger message comprises information relating to the payer and the amount, without comprising information relating to the consumed service. The session-key in combination with the ID's of both the payer and the receiver allow to process the payment in a privacy-protecting manner. The session-key is indicative for the transaction, and each transaction is linked to a unique session-key. By protecting the databases containing the above-mentioned payer related and receiver related information, correlation attacks compromising the privacy of the users of the payment systems can be averted.

Based on the description above, it will be clear that the payment tag PT and the terminal tag TT are highly similar in technical features. This makes it possible to have a tag which operates as a payment tag PT in one situation while the same tag operates as a terminal tag TT in another situation. An example is a tag which is mounted in a car, such tag can operate as a payment tag PT when the car is parked in a parking space provided with multiple terminal tags TT, wherein the parking service is consumed by the car and a payment trigger message is generated to pay an amount relating to the parking service from an account relating to the car owner to an account relating to the parking service provider. In another situation, the tag which is mounted in the car serves as a terminal tag and a passenger driving along with the car carries a payment tag PT, wherein the passenger consumes a service by driving along so that a payment trigger message is generated to pay an amount relating to the driving along service from an account relating to the passenger to the account relating to the car owner. Preferably, each tag is registered as at least one of terminal tag and payment tag. The example above shows that a single tag can be registered as terminal tag for one service and as payment tag for another service. This allows a highly flexible use of the tags in the environment to provide and consume all sorts of different services.

Figure 2 illustrates an environment 11 wherein the payment system of the invention can be used. The figure schematically illustrates a vehicle wherein three terminal tags TT1, TT2 and TT3 are arranged. The three terminal tags TT are placed in a triangle so that, based on distance measurements, the location of a payment tag can be uniquely determined via triangular calculations. In the example of figure 2, the relative position of the terminal tags TT1, TT2 and TT3 are fixed. However, situations might occur where also terminal tags TT have a dynamic position.

In the environment 11, two zones are defined. A second class zone 12 and a first class zone 13 can be predefined in the environment 11. As described above, the location of payment terminals PT1, PT2 can be uniquely determined in the environment 11. This allows to measure a first payment tag PT1 entering into the zone 13, which is defined as first class zone in the transportation vehicle. Also the duration of the stay of the first payment tag PT1 in the first class zone 13, can be determined. The terminal tags TT1, TT2 and TT3 send time and distance related information as well as identification information of the first payment tag PT1 to the backend system BS of the payment system (shown in figure 1). Based on the set of rules R, an amount can be determined relating to the service that is consumed by the first payment tag PT1. It will be clear in the context of transportation vehicles, that the set of rules can comprise dynamic payment requirements, for example wherein transportation vehicle location data, collected via GPS signals, can be further correlated to the time and location data of the payment tags so that it can be uniquely determined which trajectory was followed by the consumer carrying the payment tag. Each trajectory relates to a transportation service which can be billed to the consumer carrying the payment tag PT. Figure 2 shows a further payment tag PT2 which enters a second class zone 12 of the transportation vehicle. Based on the time and distance data collected by the terminal tags TT1, TT2 and TT3, the backend system can recognize that the further payment tag PT2 resides in the second class zone 12, and a payment trigger message can be generated by the payment message generator PMG based on this location related information in combination with the time information and identity information collected for the payment tag PT2.

Based on the description above, the skilled person will recognize that many services, wherein a correlation between a location and a duration at least partially defines the consumed service, can be set up with the payment system of the present invention. Thereby trust is created by the authentication requirement between terminal tags TT and payment tags PT. Furthermore, the backend system BS can be secured via conventional data security mechanisms. For example, the communication between the terminal tags TT and the backend system BS, via communication module 8, can be secured for example, via encryption techniques. The set of rules R can define further correlations between the data collected from the terminal tags and external data streams to further enhance the security of the system. An example of such external data stream is the trajectory information of a transportation vehicle.

It will be clear that the description above and the figures are only intended to provide examples of the invention. Modifications can be made and elements can be added or deleted from these examples without departing from the scope of protection, which is defined in the claims.

## Claims

1. A payment system comprising a payment device and a transaction terminal that is adapted to communicate with a payment service platform in order to trigger a payment from an account relating to the payment device to an account relating to the transaction terminal, wherein the transaction terminal is distributed in an environment having at least one terminal tag provided to communicate with a terminal backend system, and wherein the payment device is formed as a payment tag adapted to communicate with the at least one terminal tag to identify the payment tag to the terminal tag and to measure a distance between the payment tag and the terminal tag, wherein the terminal backend system is adapted to collect data from the at least one terminal tag, the data at least comprising said payment tag identity and said distance, and wherein the terminal backend system comprises a payment message generator for generating said payment message based on a predetermined set of rules, wherein the terminal backend system is operationally connected to said payment service platform for triggering said payment based on said payment message.

2. The payment system of claim 1, wherein the at least one terminal tags are placed in groups of at least three terminal tags having a predetermined relative position in such a manner that when distances are measured between payment tag and the at least three terminal tags, a position of the payment tag in the environment can be determined via triangular calculation.

3. The payment system of claim 2, wherein the predetermined set of rules define a zone in the environment relating to the transaction terminal, a corresponding time period and a corresponding amount, and wherein the payment message generator is adapted to generate a payment message, when the payment device resides in the zone for at least the corresponding time period, the payment message comprising said corresponding amount, said payment device identity and information relating to said transaction terminal.

4. The payment system of claim 3, wherein multiple unique transaction terminals are defined in the environment as multiple zones, wherein the multiple transaction terminals can be defined in the predetermined set of rules in relation to corresponding time periods and corresponding amounts.

5. The payment system of claim 4, wherein the multiple unique transaction terminals are formed in a single environment comprising a single group of at least three terminal tags.

6. The payment system of any one of the previous claims, wherein at least one of the terminal tags comprises a corresponding network communication module to communicate with the terminal backend system.

7. The payment system of claim 6, wherein the corresponding network communication modules are formed as wired or preferably wireless IP communication modules, and wherein all of the at least one terminal tags are provided to communicate with said terminal backend system via said network communication modules.

8. The payment system of any one of the previous claims, wherein each terminal tag and each payment tag comprises an IEEE 802.15.4.a communication module for being adapted to communicate with each other.

9. The payment system of claim 8, wherein the IEEE 802.15.4.a communication module is an ultra-wideband communication module.

10. Payment system of any one of the previous claims, wherein each one of the payment tags and the at least one terminal tag comprise a unique identification certificate.

11. Payment system of claim 10, wherein the payment tags identify to the terminal tags via a predetermined authentication procedure based on the unique identification certificates.

12. Method for triggering a payment from an account relating to a payment device to an account relating to a transaction terminal, wherein the method comprises:
- detecting a payment tag in an environment comprising at least one terminal tags;
- communicating between the payment tag and the terminal tag to identify the payment tag to the terminal tag and to measure a distance between the payment tag and the terminal tag;
- collecting data by a terminal backend system from the at least one terminal tag, the data at least comprising said payment tag identity and said distance;
- generating a payment message by the terminal backend system based on a predetermined set of rules;
- sending the payment message from the terminal backend system to a payment service platform for triggering said payment.

13. Method according to claim 12, wherein the terminal backend system collects data from a group of at least three terminal tags having a predetermined relative position, and is provided to determine a position of said payment tag in the environment via triangular calculation.

14. Method according to claim 12 or 13, wherein the communicating further comprises authenticating the payment tag to the terminal tag.
